# EUROPEAN PATENT APPLICATION

(11) **EP 3 062 280 A1**
(43) Date of publication of application: **31.08.2016**
(21) Application number: 16155399.5
(22) Date of filing: 12.02.2016
(51) Int. Cl.: G06Q 30/06, G06T 19/00

(54) **METHOD AND SYSTEM OF MANAGEMENT FOR SWITCHING VIRTUAL-REALITY MODE AND AUGMENTED-REALITY MODE**

(30) Priority: 26.02.2015 TW 104106214
(71) Applicant: Staging Design Inc., New Taipei City 242 (TW)
(72) Inventor: LEE, Chung-Pin, 242 New Taipei City (TW)
(74) Representative: Viering, Jentschura & Partner mbB Patent- und Rechtsanwälte

(57) **Abstract**

The disclosure is related to a method and a system of management for switching virtual-reality mode and augmented-reality mode. A user operates an electronic display device (22) to load virtual-reality images from a serving system (21) as entering a virtual-reality mode. When the user selects one object under the virtual-reality mode, the serving system (21) accordingly provides object information. The electronic display device (22) then loads augmented-reality images relating the object information when switched to an augmented-reality mode. The augmented-reality images for the object may be alone displayed by the electronic display device (22). The augmented-reality images may also be merged into the virtual-reality images. These images may be displayed using a picture-in-picture mode or a split-screen mode.

## Description

### BACKGROUND

### 1. Technical Field

The present invention is generally a technology for a system to be switched to a VR mode or an AR mode; in particular a system and a method switched to the VR mode in a specific display mode, or to the AR mode in another scene.

### 2. Description of Related Art

Consumer may shop in a tangible store or using an online shopping website. Rather than displayed on the online shopping webpage, the tangible store can exhibit the real goods. If the exhibited goods are the articles of furniture or furnishings, the shopkeeper may furnish and decorate the goods using specific design of the store space so as to attract the consumer's eyes.

The well-developed electronic commerce gradually brings influence on the consumer's shopping behavior. Many commodities are on sale when they are exhibited on the online shopping website. The online shopping website allows consumers to click one of the exhibited commodities to enter the shopping website. When the consumer clicks a specific shopping website for gaining the commodity's information, an online payment means are provided to perform payment.

The conventional e-commerce shopping platform usually provides the plain commodity information and/or introduces the commodity with multiple-angular image. The consumer may decide whether or not to buy the commodity based on the plain information. Actually, the consumer cannot easily look and feel the commodity based on the plain information until the commodity is handed on to the consumer, especially to the articles of furnishing that require fitting with the surrounding articles and decorations. It may meet complex procedure of returning if the consumer dissatisfies the article.

For enhancing the virtual effect for the people to browse the articles, a virtual reality (VR) technology is introduced to create a three-dimensional space simulated by computer software. The VR technology can be implemented in a display carrier that allows the user to browse articles in an immersive environment. Further, the article can be seen from various angles of point by the VR technology. The VR technology also allows the user to be like in a specific occasion.

Still further, an augmented reality (AR) technology is provided to apply the virtual reality scene to a real world using a display. The AR technology also renders interactive circumstance for the users.

### SUMMARY

The disclosure in accordance with the present invention is related to a technology switching to a virtual reality (VR) mode or to an augmented reality (AR) mode. A serving system is provided to serve one or more electronic display devices to be switched to the VR mode or the AR mode over a network. The serving system includes a VR image database used to render the VR images required in the VR mode for the electronic display device, and an AR image database used to render AR images for the electronic display device entering the AR mode. The serving system further includes a management interface unit for receiving and executing the instructions generated by the electronic display device.

When one of the electronic display devices enters the VR mode, and simultaneously loads the VR images from the serving system so as to display the VR images in a screen. On the contrary, the electronic display device is switched to the AR mode and loads the AR images relating to the object information from the serving system. In the meantime, another window can be used to display the object information in the electronic display device, or the image integrating the AR images and the VR images.

According to one embodiment, in the method, the electronic display device enters the VR mode as loading the VR images that are displayed in the electronic display device. The VR scene includes one or more object. The user may manipulate the electronic display device to select one of the objects while seeing the VR images. A selection signal is generated responsive to selection. The object information and related images are loaded to device in response to the selection signal.

According to one aspect of the present invention, the electronic display device can be used to capture a picture of a real space in the AR mode. Then a marking object in the space is acknowledged. The object information can be introduced after the correlation between the object and the space is obtained according to the image information related to the marking object. The object information is therefore integrated in AR images of the real space. The combined images are then displayed.

In another display mode, the combined AR images and the VR images can be displayed in a picture-in-picture screen, or in a split screen.

### BRIEF DESCRIPTION OF THE DRAWINGS

Fig. 1 shows a schematic diagram depicting a system framework for implementing the method for switching to VR mode and AR mode in one embodiment of the present invention;
Fig. 2 shows function block diagram depicting the system for implementing the method for switching to VR mode or to AR mode in one embodiment of the present invention;
Fig. 3 shows a flow chart describing the method for displaying the AR scene in one embodiment of the present invention;
Fig. 4 shows a schematic diagram depicting the system under the AR mode in one embodiment of the present invention;
Fig. 5 shows a flow chart describing the method of management for switching to the VR mode or to the AR mode in one embodiment of the present invention;
Fig. 6 shows a schematic diagram describing a circumstance switched to the VR mode or to the AR mode according to one embodiment of the present invention;
Fig. 7 shows another flow chart describing the method of management for switching to the VR mode or to the AR mode in one embodiment of the present invention;
Fig. 8 schematically shows a circumstance conducting switching to the VR mode or to AR mode in accordance with the present invention.

### DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts.

The disclosure of the present invention is related to a method and a system of management for switching the virtual reality mode and the augmented reality mode. In one embodiment of the present invention, the system provides a user an electronic display device capable of displaying a virtual reality and an augmented reality. A VR technology renders a three-dimensional space images through computer simulation. The electronic display device is used to display the VR images. The electronic display device is a display for displaying the VR images and the AR images. The electronic display device is such as a head-mounted display (HMD) that allows the user can look around the space as in an immersive environment. The electronic display device can also be operated in an AR mode that utilizes the augmented reality technology to display the virtual object within a real space. The position and the orientation of the electronic display device are computed in real time responsive to the signals made by the user's operation, and the viewing angle to the virtual object in the AR scene can be immediately changed. The AR technology is essentially to apply the virtual world to the real world in a display. The AR technology makes the virtual world to be interacted with the real world. Additional multimedia content can be added to the AR scene using a floating window rendered by the system. The multimedia content is such as any of picture, video, audio and text, or in combination thereof.

According to one embodiment of the present invention, a virtual scene is incorporated to display the object or a space when the electronic display device is configured to be in the VR mode. The operating mode can be switched to the AR mode in accordance with need. The AR technology allows the object information of virtual object to be seen in a real image. An additional window can be used to display a user interface in the VR mode. For example, within the VR images displayed in the electronic display device, the picture, video and text can be added to the VR scene seen by the user.

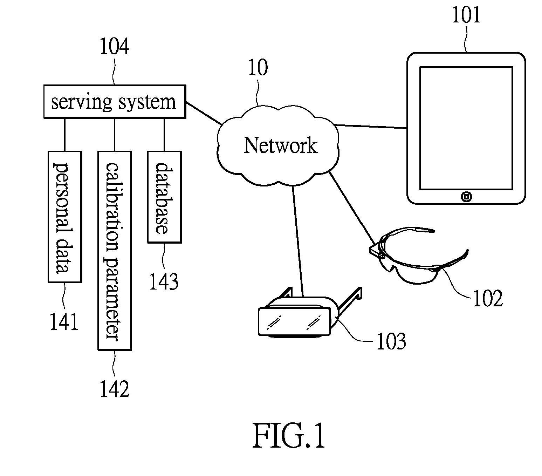

Reference is made to Fig. 1 schematically depicting a system framework for implementing the method of management for switching the VR mode and the AR mode.

This figure shows a system built over network 10. A serving system 104 rendering the data for VR mode and AR mode is included in the system. The serving system 104 is able to serve multiple users' requirements. The serving system 104 records personal data 141 and calibration parameters 142 for every user operating the display. The serving system 104 also includes a database 143 that records the VR images and the AR images with respect to every environment and every object.

In one embodiment, the serving system 104 provides VR service over network 10, rendering services of browsing articles and housing objects using the VR and AR technologies. In an exemplary example, the system allows the user to operate a VR display for browsing the object within a virtual environment; or allows the user to stay in a place for showing the article utilizing the AR technology. The VR and AR technologies can be provided to guide the user to see the existing house or pre-sale house.

The user-end electronic display devices 101, 102, and 103 obtains information under the VR mode or the AR mode from the serving system 104 over network 10. The person data 141 stored in the serving system 104 includes the user data and data of logon. The calibration parameters 142 are such as the setting parameters for the user as wearing the HMD. The preferences of the user record the setting parameters when the user wears the VR display according to his size, face, and his preferences.

The shown electronic display devices 101, 102, and 103 are the devices supporting displaying the VR images and the AR images. The electronic display device is such as the HMD that allows the user to put on his head and see the VR, AR, and the images integrating the VR and AR images in the device's display. The electronic display device can also be a smart glasses or handheld device.

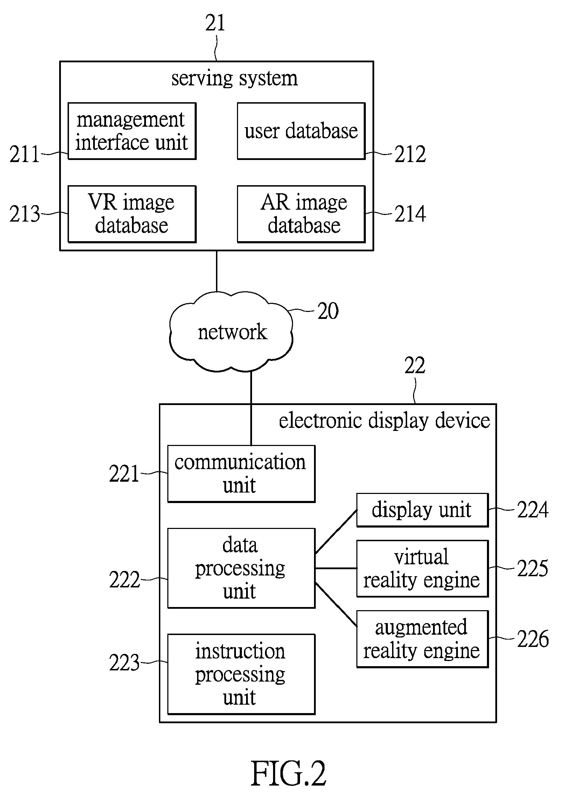

Fig. 2 shows a block diagram describing the hardware or computer software implemented functions of the system.

In the diagram, a management system for performing the interaction between the VR mode and the AR mode in one system or on apparatus is described. A serving system 21 is provided to communicate with the user-end electronic display device 22 over the network 20. The one of the essential functions of the serving system 21 is to process the data required for switching to the VR mode or the AR mode in the electronic display device 22.

The serving system 21 includes a VR image database 213 that is used to render the VR images required by the user-end one or more electronic display devices when the devices are configured to be switched to the VR mode. In particular, the VR images provided by the system 21 are based on the VR scene selected by the user. The related data is transmitted to the electronic display device 22 over network 20. The data processing circuit in the device 20 is able to process the images sent from the system 21, and also able to display the VR images. The serving system 21 further includes an AR image database 214 that is used to render the AR images required by the one or more electronic display devices when the devices is switched to the AR mode.

The serving system 21 processes the instructions generated by 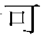 the electronic display device 22. The user can manipulate the device 22 so as to generate the instructions, including the signals of selection and switching to a specific display mode. The serving system 21 includes a management interface unit 211 that is used to receive and execute the instructions generated by the electronic display device 22. The serving system 21 also serves the user to logon the service, and upload his preference. The serving system 21 also has a user database 212 that records the user preferences, set by the user, with respect to one or more electronic display device.

Through the user database 212, the user can anytime get the data from the serving system 21. The user database 212 also stores the user's preference. The serving system 21 therefore conducts the personalized service based on the user's preference and requirement. For example, when the user puts on the electronic display device and enters a virtual reality scene for navigation, the system 21 can automatically submit the user's setting and display mode setting to the electronic display device 22 according to the user's preference.

The electronic display device 22 is a kind of wearable display or other electronic device supporting displaying the VR images. The device 22 may also be a standalone display capable of processing the VR images, or may obtain the related data via other computer system over the network 20.

In the present embodiment, the electronic display device 22 has a communication unit 221 to establish link to the network 20. The link made by the communication unit 221 may not be limited to any wired or wireless connection, or even through other device. The electronic display device 22 includes a data processing unit 222 used to process the internal signals. The data processing unit 222 is able to process the VR images and the AR images, especially to be the images displayed via a display unit 224.

The electronic display device 22 includes an instruction processing unit 223 that is used to process the instructions generated by the electronic display device 22 manipulated by the user. The instructions include an instruction for switching to the VR mode or to AR mode, an instruction for generating selection signal of selecting an article or a product, an instruction for browsing the article or product, an instruction for initiating the VR mode or the AR mode, and a gesture instruction. The instructions may be necessarily transmitted to the serving system 21 if the instructions request the data from the system 21.

The system 21 serves the terminal device 22 to view the occasion or object using the VR or AR technologies. This terminal device 22 has a virtual reality engine 225 used to process the VR images. The VR images are beforehand loaded to the device 22 when an occasion and any object are designated. The device 22 further has an augmented reality engine 226 used to process the AR images that is integrated with the real scene image captured by the electronic display device 22 so as to display the virtual object within the real scene. The information or images related to the virtual object can be displayed in the real scene. The system 21 outputs the data in response to the operating instructions made by the electronic display device 22.

In one aspect of the present invention, the electronic display device 22 can be first configured to be in the VR mode, and the serving system 21 serves the image signals. The VR images are displayed in the device 22 when the inside virtual reality engine 225 processes the image signals. When the device 22 is configured to be in the AR mode, the serving system 21 accordingly serves the AR image signals. The AR image signals are processed by the augmented reality engine 226 of the device 22, so as to generate the displayable AR images.

In one embodiment, the electronic display device 22 operated by the user generates a selection signal indicative of selecting one object, and the serving system 21 provides the object information according to the selection signal through the management interface unit 211. The object information can be an additional interface, e.g. a floating window, that is superposed on the VR images or the AR images. The object information can be text description, a picture, a video or voice signals.

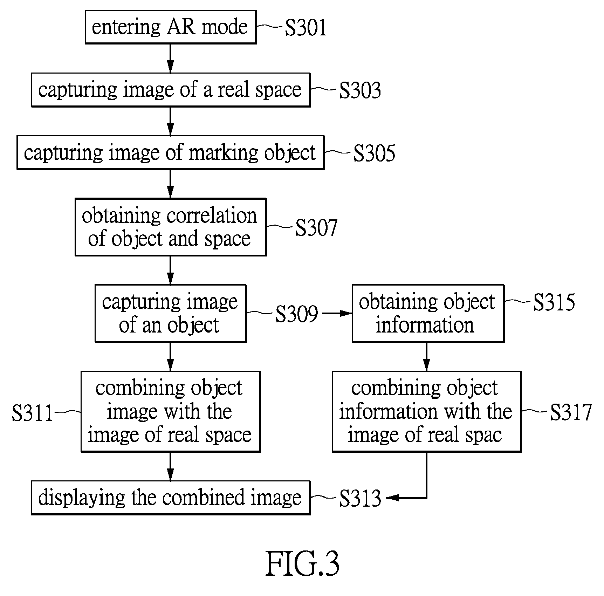

To display the AR images, reference is made to the flow chart shown in Fig. 3 according to one of the embodiments of the present invention. In the beginning, such as step S301, in response to the user's selection or operation, the electronic display device enters an AR mode. In the AR mode, the electronic display device activates its camera to capture images of a real space, such as in step S303.

In an exemplary example, one or more marking objects acting as the marker in the space for rendering the AR images. The marking object can be captured simultaneously when the real space is photographed by the camera of the device, such as in step S305. The system in the electronic display device computes the correlation of the marking object and the space based on the information relating to the marking object. The information of the marking object is such as the marker's length, width, and/or height, such as in step S307.

Next, such as in step S309, an object image is taken by the camera of the device. The correlation of the marking object and the space can be used to obtain the scale of the object in this real space. Thus, in step S311, the object image can be suitably combined with the real space. The electronic display device therefore displays the combined image, such as in step S313.

In one further embodiment, the procedure goes on to introduce further information relating to the object under the AR mode. In step S315, the serving system provides the object information, and in step S317 the device displays the object information using an additional screen or a window within the AR images. The object information can be text, picture, or video in combination with the AR images displayed in the device, such as in step S313.

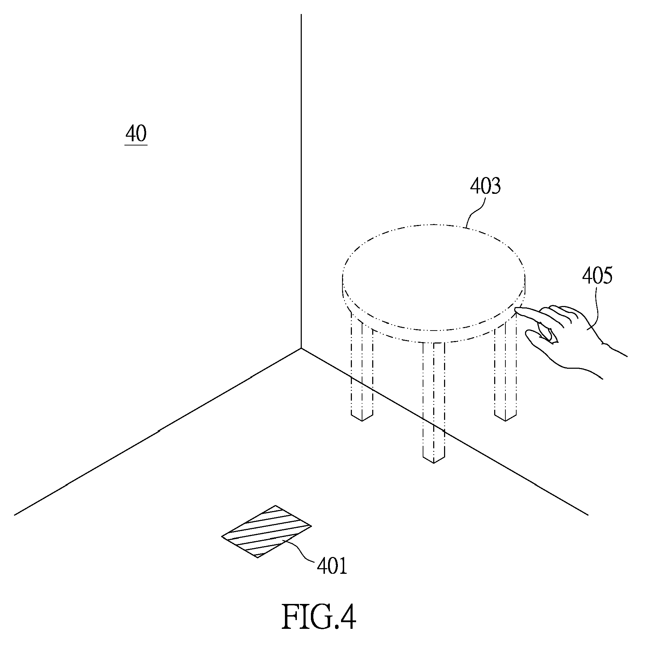

Reference is made to Fig. 4 schematically showing the circumstance under an AR mode.

A space 40 is shown in the figure. The serving system provides the virtual object to be displayed in this space 40 under the AR mode. First, the system acknowledges the scale of this space based on the correlation of a marking object 401 and the space 40 based on the information of this marking object 401. It is noted that the AR technology can ignore the tangible marker in some aspects of the technology. Therefore, the electronic display device allows the user to operate an indication symbol 405 to move in this real space. The indication symbol 405, e.g. the hand icon, allow s the user to control where an object image 403 is placed.

In the embodiment, the system enters the augmented reality mode allowing the user to experience the circumstance where the object is placed. In some embodiments, the system also allows displaying the images under VR mode and AR mode simultaneously. The AR mode can be collocated with the VR mode.

Under this augmented reality mode, the object image 403 is introduced. Another picture can also be superposed on the current AR images for showing the text description, a picture, or vide related to the object. For example, a floating window can be used to shown the object information near the object image 403.

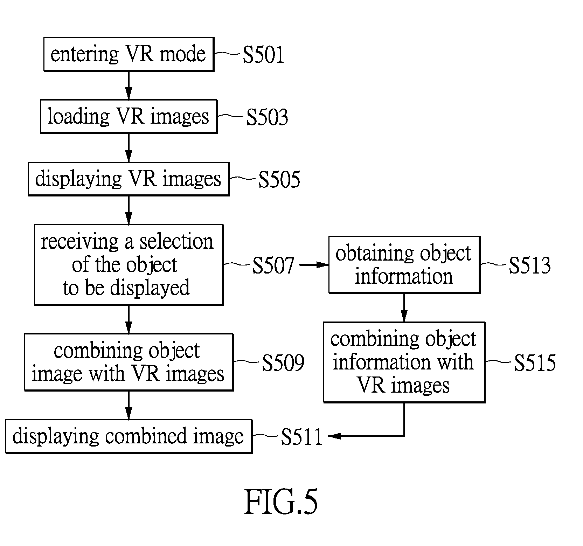

Reference next is made to Fig. 5 showing a flow chart describing the method in one embodiment of the present invention.

In the beginning, such as in step S501, the user operates the electronic display device to enter a VR mode, and loads the VR images from the serving system, such as in step S503. In one further embodiment, the electronic display device can load the images before the VR mode is initiated. The electronic display device is then able to display the VR images, such as in step S505. One or more object images can be introduced to the VR images, such as in step S507, the images are loaded to the VR images according to the user's selection. Every object is identified by its unique identification data (ID), and every ID is correlated with individual object information.

In the virtual reality mode, the object image can be loaded to the VR images by means of software tool. The software tool also allows the user to click one interested object using a user interface for obtaining further information. The object image is then combined in the VR images, such as in step S509, and the combined image is displayed, such as in step S511. The serving system receives the selection signal related to the interested object. The signal may carry the identification data with respect to the selected object. The serving system provides the object information according to the identification data. The electronic display device then receives the object information with respect to the previous selection, such as in step S513.

The object information can be exemplarily additionally combined in the VR images using an additional superposed image, and the additional information may be in form of text, picture, and/or video. In step S515, the object information is integrated to the VR images, and shown at one side of the interested object.

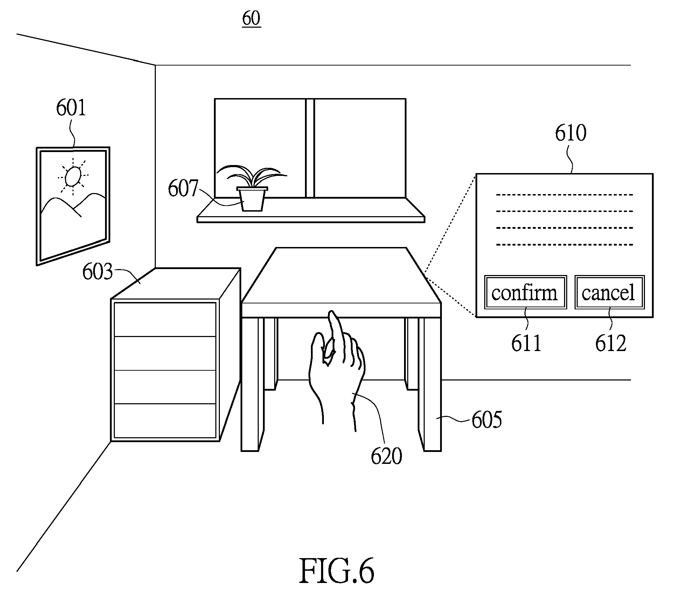

Fig. 6 shows a schematic diagram describing the circumstance of the virtual reality.

A VR space 60 is shown in the diagram and is just displaced in a screen of the electronic display device. Many objects 601, 603, 605, and 607 are exemplarily shown in VR space 60. The user can use a software-implemented indication symbol 620 to operate the virtual reality using the electronic display device. For example, the indication symbol 620 looks like the shape of a hand that acts as a cursor used to move the object. When the user wants to know the further information of the object 605, he can control the indication symbol 620 to click the object 605 in the VR mode.

According to one of the embodiments, the system can be switched to a navigation mode for showing an additional screen to display the object information 610 of the object 605. A floating window is used to show the object information 610 in form of the text, picture, video or voice. In an exemplary example, the object information 610 can be shown aside of the related object using a box. The content is shown in the box. Some options are also provided for the user to confirm or cancel the box, as the confirmation option 611 and cancellation option 612 shown in the figure.

The articles shown in the VR space 60 can be selected not only by the indication symbol 620, but also using a touch panel, a gesture, or movement of the device. Since the device can be disposed with position and orientation sensors, the user can select the article or browse the VR space by control the device's position and/or orientation.

It is worth noting that, when the user operates the software interface, e.g. a VR interface, of the electronic display device for generating the selection signal with respect to a specific object, the system receives the selection signal through the management interface unit (211, Fig. 2). The related instructions are such as the selection signal made by the device in the VR images, and signal of instructing the device or system switched to the VR mode or to the AR mode. The serving system then renders the VR images or AR images in response to the switching signal.

When the system is switched to one display mode from another mode, the management method in accordance with the present invention is performed to conduct the switching between the VR mode and AR mode. By the switching, the electronic display device first displays the VR images in the beginning, and the AR images replaces the original images.

When a scene is shown in the VR mode or in the AR mode, the images can be displayed using the existing data in the device, and also be loaded instantly from the serving system. For example, the AR images related to the object information can be loaded immediately when the selection signal is generated. The AR images related to the object information can be displayed within the AR images or VR images, such as using an additional screen.

The embodiment, such as in Fig. 4 or Fig. 6, shows the AR images and/or VR images can be shown in a picture-in-picture screen. For example, in the electronic display device, a parent picture is initiated to display the VR images, and a child picture is initiated to display the AR images.

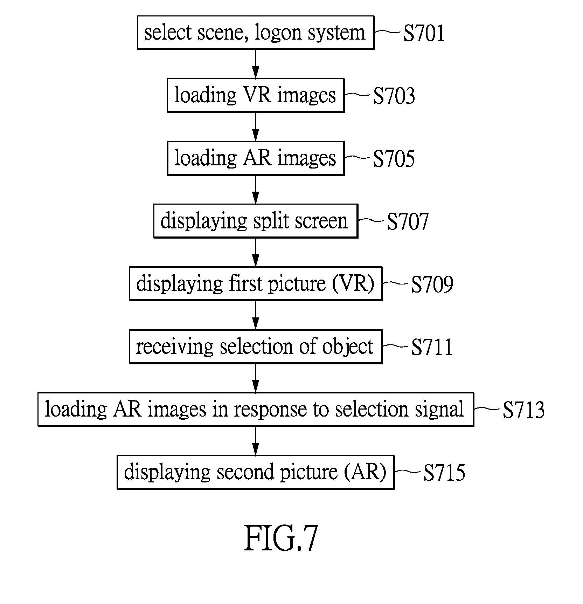

Fig. 7 shows a flow chart depicting the process of using a split screen to display the AR images and the VR images respectively.

In step S701, a VR mode is first initiated. A scene is then selected. The electronic display device may be registered in the serving system, if it is required, for obtaining the VR images with respect to the scene, such as in step S703. The AR images related to the VR scene may also be loaded, such as in step S705.

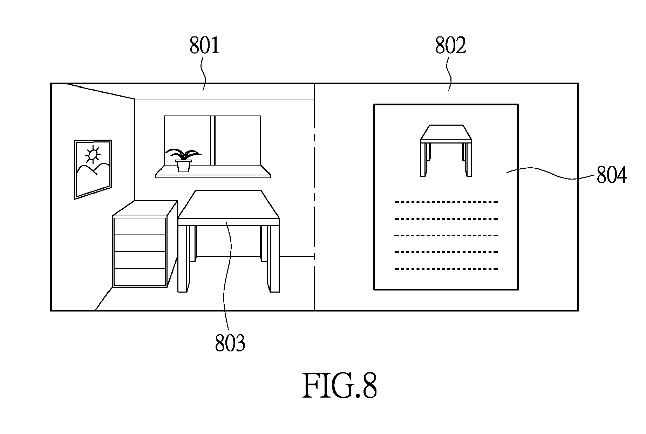

In the meantime, the electronic display device shows a split screen, such as in step S707. Two different areas on the split screen define a first screen and a second screen. In view of the circumstance schematically shown in Fig. 8, the first screen is used to display a VR scene 801 having many objects, including a selected object 803, such as in step S709 of Fig. 7. A selection signal is generated from the electronic display device when the user selects one of the objects. The serving system or the circuit of the device receives the selection signal, such as in step S711, the electronic display device accordingly loads the AR images, such as in step S713.

Under this display mode in the split screen, such as in step S715 of Fig. 7, the second screen is displayed in the display device. The second screen is such as the AR scene 802 shown in Fig. 8. The AR scene 802 is used to display the content, such as the object information 804, related to the object 803 using the AR images. An additional window may also be incorporated to the current mode for displaying the object information 804, and even integrated in the first screen or the second screen.

According to one of the embodiments of the present invention, the serving system allows the multiple electronic display devices to obtain the VR images and the AR images from its database. The terminal electronic display device can be a head-mounted display, smart glasses, or a handheld device supporting VR technology. While displaying the VR images, the system also provides the user a menu to select one scene, e.g. a shopping mall, and simultaneously transmits the images of various objects or products. The system enters the VR mode.

In an exemplary example, when the user uses the display device to enter the shopping mall in the virtual reality mode, the commodities in the shopping mall can be seen in the VR mode. The user can instruct the browsing actions, such as the browsing direction, selecting commodity, and conduct payment. The method introduces a payment procedure. When the user selects one of the commodities, the electronic display device generates a selection signal. In the meantime, an ID with respect to the selected commodity is therefore produced and sent to the serving system. The serving system receives this ID. The display device can be switched to the AR mode according to the embodiment of the present invention. The provision of the ID allows the system to deliver the information relating to the selected commodity. Some other windows may be initiated as an interactive interface provided for the user to confirm the purchase and payment.

The introduction to the commodity can be in form of text, picture, video, and voice under a VR mode or an AR mode. The display mode may be the aforementioned using a reality screen to replace another reality screen, in picture-in-picture screen, or in a split screen. The various embodiments achieve the method and system of management for switching to the VR mode or the AR mode. The user can manipulate an electronic display device to conduct virtual reality navigation, and be switched to the augmented reality mode for displaying the further information.

The above-mentioned descriptions represent merely the exemplary embodiment of the present disclosure, without any intention to limit the scope of the present disclosure thereto. Various equivalent changes, alterations or modifications based on the claims of the present disclosure are all consequently viewed as being embraced by the scope of the present disclosure.

## Claims

1. A method for managing a virtual reality mode and an augmented reality mode, comprising:
loading VR images for an initial VR mode;
entering the VR mode or an AR mode in response to a selection;
using an electronic display device (22) to display the VR images or AR images in response to the selection, in which one or more objects are in the VR mode or the AR mode;
receiving a select with respect to one of the objects, and gaining object information associated to the object;
loading text description, picture, or video related to the object information; and
using the electronic display device (22) to display images of the object information, or the images of the object information integrated in the AR images or the VR images.

2. The method as recited in claim 1, wherein the object information is revealed using a window that shows the text description, picture or video.

3. The method as recited in claim 1, as selecting entering the AR mode, further comprising:
using the electronic display device (22) to capture reality images of a space;
capturing an image of a marking object of the space;
obtaining correlation of the object and the space based on information of the marking object; and
incorporating AR images of the object information for integrated into the reality images of the space; displaying the integrated images.

4. The method as recited in claim 3, wherein the electronic display device (22) displays a screen including the AR images as switching to the AR mode, and the AR images replace the VR images.

5. The method as recited in claim 4, wherein the object information is revealed using a window that shows the text description, picture or video.

6. The method as recited in claim 1, further comprising, introducing a picture-in-picture screen to display the images in combination of the AR images and the VR images, wherein the electronic display device (22) displays the VR images as a parent picture, and displays the AR images as a child picture.

7. The method as recited in claim 6, wherein the object information is revealed using a window that shows the text description, picture or video.

8. The method as recited in claim 1, wherein the AR images and the VR images are combined in a split screen as entering the AR mode, comprising:
using the electronic display device (22) to display the split screen including a first screen and a second screen;
using the first screen to display the VR images including the image of the object; and
using the second screen to display the AR images associated with the object.

9. The method as recited in claim 8, wherein the object information is revealed using a window that shows the text description, picture or video.

10. A management system for switching to a VR mode and an AR mode, comprising:
a serving system (21) providing one or more electronic display devices (22) to be switched to entering the VR mode, or the AR mode, comprising:
a VR image database (213), providing VR images to the one or more electronic display devices (22) being switched to entering the VR mode;
an AR image database (214), providing AR images to the one or more electronic display devices (22) being switched to entering the AR mode;
a management interface unit (211), receiving and processing instructions generated by the one or more electronic display devices (22);
wherein, when one of the electronic display devices (22) enters the VR mode, the electronic display device (22) loads the VR images from the serving system (21) so as to display the VR images including images of one or more objects; the electronic display device (22) generates a selection signal when one object is selected, and the serving system (21) provides object information in response to the selection signal through the management interface unit (211); when one of the electronic display devices (22) enters the AR mode, the electronic display device (22) loads the AR images from the serving system (21); the AR images include images of one or more objects; and the electronic display device (22) is used to display the object information or images integrating the AR images and the VR images.

11. The system as recited in claim 10, wherein the serving system (21) further comprises a user database (212) in which a user setting with respect to every electronic display device (22) is recorded.

12. The system as recited in claim 10, wherein every electronic display device (22) includes an instruction processing unit (223) used to execute an instruction for switching to the VR mode or AR mode.

13. The system as recited in claim 12, wherein the management interface unit (211) receives instructions generated by the one or more electronic display devices (22), and the instructions include instruction for generating selection signal of selecting one of the objects in the VR images, and the instruction for switching to the VR mode or AR mode; and the serving system (21) provides the VR images or the AR images in response to the instruction for switching to the VR mode or the AR mode.

14. The system as recited in claim 13, wherein the serving system (21) further comprises a user database (212) in which a user setting with respect to every electronic display device (22) is recorded.
